# EUROPÄISCHE PATENTANMELDUNG

(11) **EP 2 275 934 A2**
(43) Veröffentlichungstag der Anmeldung: **19.01.2011**
(21) Anmeldenummer: 10168530.3
(22) Anmeldetag: 06.07.2010
(51) Int. Cl.: G06F 11/26

(54) **System und Verfahren zum Testen eines elektronischen Geräts**

(30) Priorität: 07.07.2009 DE 102009032197
(71) Anmelder: Vodafone Holding GmbH, 40213 Düsseldorf (DE)
(72) Erfinder: Lien, Tam, 40599, Düsseldorf (DE); Ackermann, Thomas, 50674, Köln (DE)
(74) Vertreter: Jostarndt, Hans-Dieter

(57) **Zusammenfassung**

Die Erfindung betrifft ein System zum Testen eines elektronischen Geräts (101; 101'), insbesondere einer Computereinrichtung, mit einer Datenschnittstelle (108; 108') und einer Benutzerschnittstelle (102, 102'), die dazu ausgestaltet ist, Bild- und/oder Audioinformationen umfassende Benutzerausgaben auszugeben. Das System umfasst eine Automationseinheit (106), die über eine Datenverbindung (107; 107') mit der Datenschnittstelle (108; 108') des elektronischen Geräts (101; 101') verbindbar ist, wobei die Benutzerausgaben über die Datenschnittstelle (108; 108') ausgebbar und über die Datenverbindung (107; 107') an die Automationseinheit (106) übertragbar sind und die Automationseinheit (106) dazu ausgestaltet ist, eine Auswertung der Benutzerausgaben vorzunehmen. Bei der über die Datenschnittstelle ausgebbaren Benutzerausgabe handelt es sich insbesondere um eine Remote-Desktop-Ausgabe. Neben dem System betrifft die Erfindung zudem ein Verfahren zum Testen eines elektronischen Geräts.

## Beschreibung

Die Erfindung bezieht sich auf die Automatisierung von Tests elektronischer Geräte. Diesbezüglich betrifft die Erfindung ein System und ein Verfahren zum Testen eines elektronischen Geräts.

Elektronische Geräte und die auf ihnen ausgeführten Programme werden oftmals umfangreichen Tests unterzogen, um ihre einwandfreie Funktion zu überprüfen. In der Vergangenheit wurden derartige Funktionstest weitgehend manuell ausgeführt, indem ein Bediener das zu testende Gerät bzw. in einer Testanordnung enthaltene Geräte entsprechend eines vorgegebenen Testablaufs bedient. Mit zunehmender Komplexität und Funktionsvielfalt von elektronischen Geräten und den auf ihnen ausgeführten Programmen gestalten sich manuelle Funktionstest jedoch sehr personal- und zeitaufwändig. Daher wird nach Wegen zu einer automatisierten Testdurchführung gesucht, um den Zeit- und Kostenaufwand zur Durchführung von Funktionstests zu verringern. Eine Herausforderung bei der Automatisierung von Gerätetests besteht dabei insbesondere darin, die Testanordnung während des Testbetriebs möglichst in der gleichen Weise zu bedienen wie ein Benutzer im Normalbetrieb.

Aus der DE 10 2006 004 284 A1 geht ein Testverfahren für ein eine Benutzerschnittstelle aufweisendes technisches Gerät hervor. Insbesondere werden mittels des Verfahrens mobile Kommunikationsendgeräte, wie etwa Mobiltelefone, getestet. Zur Durchführung des Tests wird von einer Steuereinheit eine Robotereinrichtung gesteuert, die Ausgaben des Testgeräts mittels einer Kamera und eines Mikrofons erfasst. Die erfassten Ausgaben werden in der Steuereinheit ausgewertet, um Gerätefunktionen automatisiert zu erfassen. Zur Bedienung des Testgeräts weist die Robotereinrichtung Betätigungseinrichtungen auf, insbesondere einen Stößel zur Betätigung einer Tastatur des Testgeräts.

Bei dem Testverfahren ist aufgrund des Einsatzes der Robotereinrichtung zwar sichergestellt, dass die Bedienung des im Testbetrieb der Bedienung im Normalbetrieb entspricht; die Bereitstellung der Robotereinrichtung ist jedoch mit einem hohen Aufwand verbunden. So müssen sich die Robotereinrichtung und das Testgerät am gleichen Ort befinden, und die Robotereinrichtung muss insbesondere mechanisch an das Testgerät angepasst werden.

Es ist daher eine Aufgabe der vorliegenden Erfindung, die automatisierte Durchführung von Gerätetests zu vereinfachen. Insbesondere soll eine vereinfachte Anbindung von einer Testanordnung enthaltenen Geräten an eine Auswerte- und/oder Steuerungsautomatik zur Durchführung von Tests ermöglicht werden.

Die Aufgabe wird durch ein System mit den Merkmalen des Patentanspruchs 1 und durch ein Verfahren mit den Merkmalen des Patentanspruchs 13 gelöst. Ausführungsformen des Systems und des Verfahrens sind in den abhängigen Ansprüchen angegeben.

Gemäß einem ersten Aspekt der Erfindung wird ein System zum Testen eines elektronischen Geräts in einer Testanordnung vorgeschlagen, die über eine Datenschnittstelle und eine Benutzerschnittstelle verfügt. Die Benutzerschnittstelle ist dazu ausgestaltet, Bild- und/oder Audioinformationen umfassende Benutzerausgaben auszugeben. Das System umfasst eine Automationseinrichtung, die über eine Datenverbindung mit der Datenschnittstelle verbindbar ist, wobei die Benutzerausgaben über die Datenschnittstelle ausgebbar und über die Datenverbindung an die Automationseinrichtung übertragbar sind. Die Automationseinrichtung ist ferner dazu ausgestaltet, eine Auswertung der Benutzerausgaben vorzunehmen.

Gemäß einem weiteren Aspekt schlägt die Erfindung ein Verfahren zum Testen eines elektronischen Geräts in einer Testanordnung vor, die über eine Datenschnittstelle und eine Benutzerschnittstelle verfügt. Die Benutzerschnittstelle ist dazu ausgestaltet, Bild- und/oder Audioinformationen umfassende Benutzerausgaben auszugeben. Über eine Datenverbindung wird eine Automationseinrichtung mit der Datenschnittstelle verbunden, wobei die Benutzerausgaben über die Datenschnittstelle ausgegeben und über die Datenverbindung an die Automationseinrichtung übertragen werden. Die Automationseinrichtung wertet die erhaltenen Benutzerausgaben aus.

Die Testanordnung beinhaltet das zu testende elektronische Gerät. Dieses kann die zuvor genannte Datenschnittstelle umfassen. Gleichfalls kann die Testanordnung jedoch auch ein oder mehrere weitere elektronische Geräte umfassen, mit denen das zu testende Gerät im Normalbetrieb, das heißt, wenn kein Test durchgeführt wird, zusammenwirkt. Die Datenschnittstelle kann dabei auch Bestandteil eines derartigen weiteren Geräts sein. Hierbei kann es sich beispielsweise um ein weiteres elektronisches Gerät handeln, mit dem das zu testende Gerät konfiguriert werden kann oder mit dem es in anderer Weise kommunizieren kann. Entsprechendes wie für die Datenschnittstelle gilt für die Benutzerschnittstelle, die Bestandteil desselben Geräts ist. Die Testanordnung kann in einer Ausgestaltung ein Bestandteil des Systems sein.

Unter Benutzerausgaben sind die Ausgaben zu verstehen, die ein elektronisches Gerät, insbesondere eine Computereinrichtung, im normalen Betrieb über eine Benutzerschnittstelle an den Benutzer ausgibt. Hierbei kann es sich insbesondere um Informationen handeln, die mittels einer Anzeigeeinrichtung des elektronischen Geräts ausgegeben werden und etwa Bilder, Videos und Text enthalten können. Gleichfalls können an den Benutzer Audioinformationen ausgegeben werden, die beispielsweise Sprache, Musik oder vorgegebene Töne bzw. Tonfolgen umfassen. Die Ausgabe der Audioinformationen erfolgt beispielsweise mittels einer Lautsprechereinrichtung des elektronischen Geräts. Darüber hinaus können Protokoll- und Schnittstellendaten an die Automationseinrichtung übertragen werden, die zur Auswertung des Tests berücksichtigt werden, um die korrekte Funktionsweise des Testgeräts zu bestimmen.

Die Erfindung beinhaltet die Idee, die Benutzerausgaben zur Durchführung eines Tests eine Datenschnittstelle auszugeben und zur Auswertung einer Automationseinrichtung zuzuführen. Die Möglichkeit zur Ausgabe von Benutzerausgaben über eine Datenschnittstelle ist in vielen elektronischen Geräten standardmäßig vorhanden, um die Geräte mittels einer entfernten Computereinrichtung, bedienen zu können. Üblicherweise wird eine derartige Bereitstellung von Benutzerausgaben auch als Remote-Desktop bezeichnet. Ein Vorteil der Ausgabe von Benutzerausgaben als Remote-Desktop im Hinblick auf die Durchführung von Tests besteht insbesondere darin, dass vorhandene Funktionalitäten genutzt werden können, um auf die Benutzerausgaben zuzugreifen. Zusätzliche Schnittstellen zur Durchführung des Tests müssen nicht geschaffen werden. Hierdurch wird die Anpassung der Automationseinheit an die Testanordnung erleichtert, und es wird sichergestellt, dass die Funktionsweise von Geräten in der Testanordnung nicht durch zusätzliche Schnittstellen verändert wird und keine anderen speziellen Anpassungen eines Geräts vorgenommen werden müssen, was zu einer Verfälschung der Testergebnisse führen könnte. Vielmehr werden die in der Testanordnung enthaltenen Geräte während des Testbetriebs in der gleichen Weise betrieben wie im Normalbetrieb. Die Testlogik ist in der Automationseinheit implementiert. Hierdurch werden besonders realitätsnahe Testbedingungen gewährleistet.

Im Rahmen eines Remote-Desktop-Mechanismus können Benutzerausgaben anstelle der Benutzerschnittstelle über die Datenschnittstelle ausgegeben werden, oder die Bereitstellung der Benutzerausgaben über die Datenschnittstelle erfolgt zusätzlich zu der Ausgabe an der Benutzerschnittstelle. Daher ist es in einer Ausgestaltung der Erfindung vorgesehen, dass Benutzerausgaben von der Benutzerschnittstelle auf die Datenschnittstelle umleitbar sind oder über die Datenschnittstelle eine Kopie von an der Benutzerschnittstelle ausgegebenen Benutzerausgaben bereitgestellt werden können.

Eine Ausgestaltung der Erfindung sieht vor, dass die Automationseinrichtung dazu ausgestaltet ist, eine Auswertung der Benutzerausgaben anhand wenigstens einer Maßnahme vorzunehmen, die ausgewählt ist aus der Gruppe umfassend eine Bildmustererkennung, eine Texterkennung und eine Spracherkennung. Vorteilhaft kann anhand von derartigen Erkennungsmaßnahmen ein Zustand des die Datenschnittstelle aufweisenden Geräts ermittelt werden, der sich beispielsweise infolge einer Bedieneingabe oder eines weiteren Ereignisses ergibt.

Eine verbundene Ausgestaltung der Erfindung ist dadurch gekennzeichnet, dass die Automationseinrichtung dazu ausgestaltet ist, aus erhaltenen Bildinformationen eine Bildfolge zu erstellen, wobei in der Bildfolge enthaltene Bilder für die Bildmuster- und/oder Texterkennung heranziehbar sind. Hierdurch wird es ermöglicht, Muster- und/oder Texterkennungsverfahren für Bilder zu verwenden, die in anderen Bereichen vielfach eingesetzt werden. Eine Anpassung der Erkennungsverfahren an die Signale bzw. das Format der Remote-Desktop-Ausgabe ist damit nicht erforderlich.

Darüber hinaus ist es in einer Ausführungsform der Erfindung vorgesehen, dass die Bildinformationen eine grafische Benutzeroberfläche des die Datenschnittstelle aufweisenden elektronischen Geräts umfassen. Anhand einer Muster- und/oder Texterkennung können insbesondere vorgegebene Elemente der grafischen Benutzeroberfläche identifiziert werden, um den Zustand des elektronischen Geräts zu ermitteln. Ferner können auch solche Elemente der grafischen Benutzeroberfläche erkannt werden, die zur Bedienung des elektronischen Geräts verwendet werden. Ein Beispiel hierfür sind Schaltflächen in der grafischen Benutzeroberfläche.

Eine Weiterbildung der Erfindung zeichnet sich dadurch aus, dass die Benutzerschnittstelle wenigstens ein Eingabemittel zum Erzeugen von Steuersignalen umfasst und die Automationseinrichtung dazu ausgestaltet ist, entsprechende Steuersignale zu erzeugen, die über die Datenverbindung übertragbar und mittels der Datenschnittstelle empfangbar sind, um die Testanordnung zu beeinflussen. Insbesondere wird dabei das in der Testanordnung enthaltene, die Datenschnittstelle aufweisende Gerät gesteuert. Die genannte Möglichkeit zur Steuerung eines elektronischen Geräts ist üblicherweise innerhalb der zuvor beschriebenen Remote-Desktop-Mechanismen vorgesehen und kann im Rahmen der Erfindung zur Bedienung eines in der Testanordnung enthaltenen Geräts eingesetzt werden. Die Automationseinrichtung erzeugt dabei gleichartige Steuersignale, wie sie mittels der Benutzerschnittstelle des Geräts erzeugt werden können, so dass die Steuersignale der Automationseinrichtung in dem Gerät in gleicher Weise interpretiert und verarbeitet werden können wie Steuersignale der Benutzerschnittstelle. Eine Vorteil dieser Weiterbildung besteht wiederum darin, dass keine zusätzlichen Schnittstellen zur Bedienung des Geräts im Testbetrieb vorgesehen werden müssen, wodurch die Anpassung der Automationseinheit an die Testanordnung vereinfacht und eine Verfälschung des Testergebnisses durch zusätzliche Schnittstellen vermieden wird.

Eine Ausgestaltung der Erfindung beinhaltet, dass zur Übermittlung der Benutzerausgaben und/oder der von der Automationseinrichtung erzeugten Steuersignale eine Remote-Desktop-Verbindung verwendet wird. Vorteilhaft sind Remote-Desktop-Mechanismen in einer Vielzahl von Computereinrichtung standardmäßig als Bestandteile des Betriebssystems implementiert oder können in einfacher Weise durch Installation einer Software ergänzt werden. Derartige Software ist problemlos kommerziell verfügbar. Insoweit sind an dem Testgerät höchstens sehr geringe Änderungen vorzunehmen, um einen Test durchzuführen.

Eine Ausführungsform der Erfindung beinhaltet, dass die Automationseinheit dazu ausgestaltet ist, anhand der Auswertung der Benutzerausgaben vorgegebene Benutzerausgaben zu erkennen und dass die Automationseinheit dazu konfiguriert ist, die vorgegebenen Benutzerausgaben mit erwarteten Benutzerausgaben zu vergleichen und/oder ein Steuersignal zur Beeinflussung der Testanordnung in Abhängigkeit von einer erkannten Benutzerausgabe zu erzeugen. Die Steuersignale dienen insbesondere zur Steuerung des elektronischen Geräts. Die erwartete Benutzerausgabe kann derjenigen Ausgabe entsprechen, die bei einer einwandfreien Funktionsweise der Testanordnung infolge einer Bedieneingabe oder eines weiteren Ereignisses bereitgestellt wird. Durch einen Vergleich der empfangenen Benutzerausgabe mit der erwarteten Benutzerausgabe kann somit die einwandfreie Funktionsweise des Testgeräts geprüft werden. Ferner kann infolge einer erkannten Benutzerausgabe vorteilhaft eine Bedienaktion an die Datenschnittstelle aufweisenden Gerät vorgenommen werden, indem ein entsprechendes Steuersignal erzeugt wird. So kann beispielsweise eine Schaltfläche betätigt werden, nachdem sich ein die Schaltfläche enthaltenes Fenster in der grafischen Benutzeroberfläche entsprechenden Geräts geöffnet hat.

Neben dem Test eines einzelnen elektronischen Geräts ermöglicht die Erfindung, wie zuvor erläutert, auch ein systemübergreifendes Testen von elektronischen Geräten, die miteinander interagieren. Hierzu können der Automationseinheit Benutzerausgaben von mehreren elektronischen Geräten zugeführt werden. Ferner kann eine Steuerung von mehreren elektronischen Geräten durch die Automationseinheit vorgesehen sein. Die Übertragung von Benutzerausgaben und/oder die Steuerung der Geräte kann in der zuvor beschriebenen Weise vorgenommen werden, insbesondere über eine Remote-Desktop-Verbindung.

In einer Weiterbildung der Erfindung verfügt das zu testende elektronische Gerät oder ein weiteres in der Testanordnung enthaltenes elektronisches Gerät eine weitere Benutzerschnittstelle zur Ausgabe von Bild- und/oder Audioinformationen umfassenden weiteren Benutzerausgaben, wobei das Systeme eine Erfassungseinrichtung umfasst, die dazu ausgestaltet ist, die von der weiteren Benutzerschnittstelle ausgegebenen Benutzerausgaben zu erfassen und an die Automationseinheit zu übermitteln, wobei die Automationseinheit dazu ausgestaltet ist, die weiteren Benutzerausgaben auszuwerten. Vorteilhaft kann in dieser Ausgestaltung ein weiteres Gerät in die Testanordnung integriert werden, welches nicht über einen Remote-Desktop-Mechanismus verfügt. Benutzerausgaben des weiteren Geräts werden aufgrund des fehlenden Remote-Desktop-Mechanismus mittels einer Erfassungseinrichtung an der Benutzerschnittstelle des Geräts erfasst und von der Erfassungseinrichtung an die Automationseinrichtung übermittelt. Zur Erfassung von Bildinformationen kann dabei insbesondere eine Kameraeinrichtung verwendet werden und zur Erfassung von Audioinformationen eine Lautsprechereinrichtung. Vorteilhaft können die mittels der Erfassungseinrichtung erfassten Benutzerausgaben in der Automationseinrichtung grundsätzlich in der gleichen Weise ausgewertet werden wie die Remote-Desktop-Ausgaben. Insbesondere können erfasste Bildinformationen in der gleichen Weise mittels einer Muster- und/oder Texterkennung ausgewertet werden. Hierzu können Bildfolgen aus den mit der Kamera erfassten Bildern erstellt werden. Somit lassen sich Geräte, die nicht über einen Remote-Desktop-Mechanismus verfügen, in einfacher Weise in die Testanordnung integrieren.

Eine verbundene Ausführungsform der Erfindung ist dadurch gekennzeichnet, dass die weitere Benutzerschnittstelle wenigstens eine von einem Benutzer mechanisch oder akustisch betätigbare Eingabeeinrichtung umfasst, um das die weitere Benutzerschnittstelle aufweisende Gerät zu steuern, und eine Betätigungseinrichtung vorgesehen ist, die dazu ausgestaltet ist, die Eingabeeinrichtung zu betätigen, wobei die Automationseinrichtung dazu ausgebildet ist, die Betätigungseinrichtung zu steuern, um eine Steuerung des die weitere Benutzerschnittstelle aufweisenden Geräts vorzunehmen. Vorteilhaft ermöglicht die Betätigungseinrichtung eine Bedienung eines weiteren Geräts, das nicht über einen Remote-Desktop-Mechanismus verfügt, durch die Automationseinrichtung.

Die Erfindung ermöglicht es insbesondere, die Interaktion zwischen den in der Testanordnung enthaltenen Geräten zu testen. Hierzu sieht eine Ausführungsform der Erfindung vor, dass die Automationseinrichtung dazu ausgestaltet ist, die Steuersignale in Abhängigkeit von einer Benutzerausgabe des die weitere Benutzerschnittstelle aufweisenden elektronischen Geräts zu erzeugen und/oder dass die Automationseinrichtung dazu ausgestaltet ist, die Betätigungseinrichtung in Abhängigkeit von einer Benutzerausgabe des die Benutzerschnittstelle aufweisenden elektronischen Geräts zu steuern.

In einer Ausführungsform der Erfindung handelt es sich bei dem weiteren elektronischen Gerät um ein mobiles Kommunikationsendgerät, wie beispielsweise ein Mobiltelefon, ein PDA (Personal Data Assistents). Derartige Geräte verfügen in der Regel nicht über einen Remote-Desktop-Mechanismus. Vorteilhaft können sie jedoch in der zuvor beschriebenen Weise in die Testanordnung integriert werden, um ihre Interaktion mit einem anderen Gerät, insbesondere einer Computereinrichtung mit einem Remote-Desktop-Mechanismus zu testen. Das eigentliche Testgerät kann dabei das Kommunikationsendgerät sein.

Gemäß einem weiteren Aspekt betrifft die Erfindung zudem ein elektronisches Gerät, das nach einem Verfahren der zuvor beschriebenen Art getestet worden ist oder baugleich mit einem nach dem Verfahren getesteten Gerät ist. Ein derartiges Gerät besitzt die Eigenschaft, dass mit ihm ein Testresultat verknüpft ist, dass anhand eines Verfahrens der zuvor beschriebenen Art gewonnen worden ist. Der Test des Geräts oder eines baugleichen Geräts kann beispielsweise vorgenommen werden, bevor das Gerät in einen Vertrieb gelangt. Anhand des Tests kann die einwandfreie Funktionsweise des Geräts ermittelt werden. Dabei kann das Gerät auch Informationen über einen erfolgreichen Test desselben oder eines baugleichen Geräts nach dem Verfahren beinhalten. Diese Informationen kann beispielsweise von einem Käufer eingesehen werden und ihm die einwandfreie Funktionsweise des Geräts zu bestätigen.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:
- Fig. 1: ein erfindungsgemäßes System zum Testen eines Testgeräts,
- Fig. 2: ein erfindungsgemäßes System zum Testen von zwei miteinander inter- agierenden Testgeräten in einer ersten Ausgestaltung und
- Fig. 3: ein erfindungsgemäßes System zum Testen von zwei miteinander inter- agierenden Testgeräten in einer weiteren Ausgestaltung.

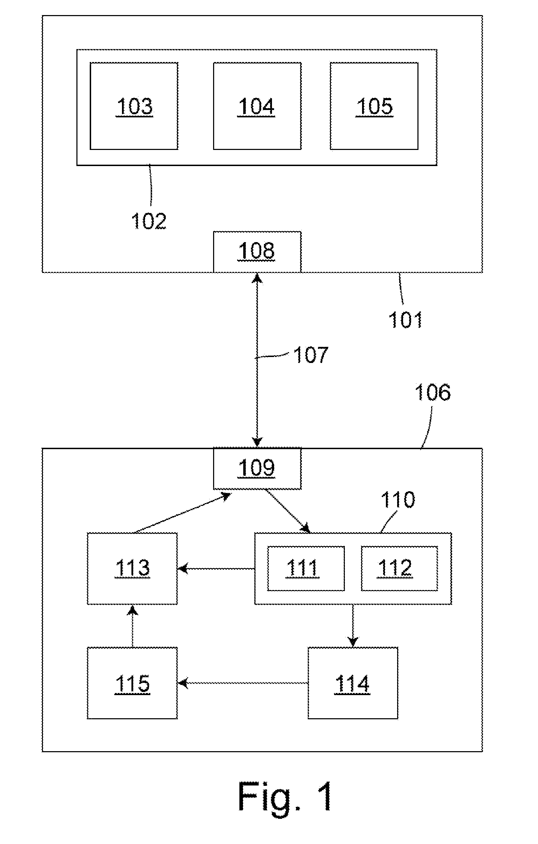

Figur 1 zeigt eine schematische Darstellung eines Systems zum automatischen Testen einer Testanordnung mit einer Computereinrichtung 101, bei der es sich um das Testgerät handelt. Insbesondere können auf der Computereinrichtung 101 ausgeführte Programme und die Hardware der Computereinrichtung 101 in einem automatisierten Testablauf getestet werden. Bei der Computereinrichtung 101 kann es sich um einen PC, einen Servercomputer oder eine ähnliche Datenverarbeitungsanlage zur Ausführung von Programmen handeln.

Die Computereinrichtung 101 verfügt über eine Benutzerschnittstelle 102, die es einem lokalen Benutzer ermöglicht, mit der Computereinrichtung 101 zu interagieren. Die Benutzerschnittstelle 102 umfasst vorzugsweise eine Anzeigeeinrichtung 103, die als ein Display ausgestaltet sein kann. Mittels der Anzeigeeinrichtung 103 werden Ausgaben von auf der Computereinrichtung 101 ausgeführten Programmen dargestellt. Dies geschieht vorzugsweise innerhalb einer grafischen Benutzeroberfläche (GUI). Weiterhin kann die Computereinrichtung 101 eine beispielsweise als Lautsprecher ausgestaltete Audioausgabeeinrichtung 105 umfassen. Mittels der Audioausgabeeinrichtung 105 können Audiosignale, wie Sprache, Musik oder vorgegebenen Geräuschmuster ausgegeben werden. Bei den Geräuschmustern kann es sich etwa um Quittierungssignale oder Warnsignale handeln.

Darüber hinaus umfasst die Benutzerschnittstelle 102 eine oder mehrere Eingabeeinrichtungen 104. Diese umfassen beispielsweise eine Eingabeeinrichtung 104, um innerhalb von grafischen Benutzeroberflächen einen Zeiger oder Cursor zu navigieren und Bedienaktionen, wie beispielsweise das Betätigen einer Schaltfläche, auszuführen. Bei dieser Eingabeeinrichtung 104, die im Folgenden als Zeigereinrichtung bezeichnet wird, kann es sich etwa um eine Computermaus, einen Trackball oder ähnliches handeln. Weiterhin kann die Computereinrichtung 101 Spracheingaben ermöglichen. Hierfür kann als weitere Eingabeeinrichtung 104 ein Mikrofon zum Erfassen der Spracheingaben eines lokalen Benutzers vorgesehen sein. Mittels der Eingabeeinrichtungen 104 kann ein lokaler Benutzer Eingaben tätigen um die Computereinrichtung 101 und die auf der Computereinrichtung 101 ausgeführten Programme zu steuern und Inhalte einzugeben, wie beispielsweise geschriebene oder gesprochene Texte.

Die Benutzerschnittstelle 102 dient insbesondere zur Verwendung und Steuerung der Computereinrichtung 101 durch den Benutzer im regulären Betrieb, d.h., wenn kein Test durchgeführt wird. Daher werden die Ausgaben der Computereinrichtung 101, die über die Benutzerschnittstelle 102 ausgegebenen werden können, hier auch als Benutzerausgaben bezeichnet. Entsprechend werden Eingaben, die von einem Benutzer über die Benutzerschnittstelle 102 eingegeben werden können, auch als Benutzereingaben bezeichnet.

Im Testbetrieb wird die Computereinrichtung 101 durch eine Automationseinheit 106 gesteuert. Diese ist mit der Computereinrichtung 101 über eine Datenverbindung 107 verbunden. Die Datenverbindung 107 ist vorzugsweise als eine Netzwerkverbindung realisiert, die über eine lokales Netzwerk (LAN) oder ein Weitverkehrsnetzwerk (WAN), wie beispielsweise das Internet, hergestellt wird. Damit kann die Computereinrichtung 101 in einer beliebigen räumlichen Entfernung von der Automationseinheit 106 angeordnet sein. Gleichfalls kann die Datenverbindung 107 jedoch auch in einer anderen dem Fachmann bekannten Weise ausgestaltet sein, beispielsweise als eine Verbindung über ein Datenkabel, eine Funkverbindung oder dergleichen. Seitens der Computereinrichtung 101 wird die Datenverbindung 107 über eine Datenschnittstelle 108 hergestellt, die insbesondere Daten entsprechend den für die Datenverbindung 107 vorgesehenen Datenübertragungsprotokollen sendet und entgegennimmt. Innerhalb der Computereinrichtung 101 steht zu diesem Zweck eine Remoteschnittstelle 109 zur Verfügung. Hierbei handelt es sich grundsätzlich um eine Datenschnittstelle der Automationseinheit 106, die insbesondere zur sprachlichen Abgrenzung von der Datenschnittstelle 108 der Computereinrichtung 101 als Remoteschnittstelle 109 bezeichnet wird.

Die Computereinrichtung 101 verfügt über einen Mechanismus, der Benutzerausgaben, insbesondere die grafische Benutzeroberfläche sowie Audiosignale, über die Datenschnittstelle 108 ausgibt, so dass sie über die Datenverbindung 107 gesendet werden können. Gleichfalls ermöglicht der Mechanismus, Eingaben über die Datenschnittstelle 108 zu empfangen, die mit der Eingabeeinrichtung 104 getätigten lokalen Benutzereingaben entsprechen. Anhand des Mechanismus ist es möglich Ausgaben der Benutzerschnittstelle 102 zu der Datenschnittstelle 108 umzuleiten, oder an der Datenschnittstelle 108 eine Kopie der Ausgaben bereitzustellen. Gleichermaßen kann die Steuerung der Computereinrichtung 101 von den Eingabeeinrichtungen 104 auf die Datenschnittstelle 108 umgelegt werden, oder es können sowohl mittels der Eingabeeinrichtung 104 als auch über die Datenschnittstelle 108 Eingaben vorgenommen werden. Ein solcher Mechanismus wird auch als Remote-Desktop-Mechanismus bezeichnet und ist in vielen Computereinrichtungen innerhalb des Betriebssystems standardmäßig vorhanden. So stellt etwa das verbreitete Betriebssystem Windows der Firma Microsoft das Remote Desktop Protocol (RDP) zur Verfügung, das einen Remote-Desktop-Mechanismus bereitstellt.

In der Automationseinheit 106 werden die Benutzerausgaben mittels der Remoteschnittstelle 109 empfangen. Zur Ausführung von automatisierten Tests werden die erhaltenen Benutzerausgaben in der Automationseinheit 106 automatisiert ausgewertet. Dabei werden grafische Benutzerausgaben, d.h. insbesondere die grafische Benutzeroberfläche der Computereinrichtung 101, vorzugsweise anhand einer Bild- oder Videoauswertung ausgewertet. Die Remoteschnittstelle 109 erzeugt daher aus den erhaltenen grafischen Benutzerausgaben eine Bildfolge, die als Folge von einzelnen Bildern oder als eine Videosequenz ausgestaltet sein kann. Die erzeugte Bildfolge wird dann an eine Auswerteeinheit 110 der Automationseinheit 106 übergeben. Die Bildfolge kann dabei beispielsweise Bilder oder Videosequenzen in einem dem Fachmann bekannten Formats enthalten. Hierzu können die über die Remoteschnittstelle 109 empfangenen grafischen Benutzerausgaben in das vorgesehene Format konvertiert bzw. in dem vorgesehenen Format erzeugt werden. Die erzeugte Bildfolge entspricht damit einer Folge sogenannter Screenshots der grafischen Benutzeroberfläche der Computereinrichtung 101, die in der Automationseinheit 106 erzeugt wird. Alternativ kann es auch vorgesehen sein, dass die Bilder bereits innerhalb der Computereinrichtung 101 durch einen internen Mechanismus der Computereinrichtung 101 erzeugt und diese Bilder über die Datenverbindung 107 an die Automationseinheit 106 übermittelt werden. Über die Remoteschnittstelle 109 empfangene Audio-Signale werden gleichfalls an die Auswerteeinheit 110 übergeben.

Die grafischen Benutzerausgaben der Computereinrichtung 101 zeigen den Bedienzustand von Programmen, die auf der Computereinrichtung 101 ausgeführt werden. Insbesondere werden Reaktion auf Benutzereingaben oder andere Ereignisse dargestellt. Ferner umfasst die in den grafischen Benutzerausgaben enthaltene grafische Benutzeroberfläche üblicherweise Bedienflächen, die anhand von Benutzereingaben betätigt werden können, um die Programm zu steuern. Zur Ermittlung von Bedienzuständen bzw. Reaktion eines Programms und zur Erkennung von Bedienflächen weist die Auswerteeinrichtung 110 einen Grafikteil 111 auf, in dem eine Mustererkennung durchgeführt wird. Die Mustererkennung umfasst vorzugsweise eine Identifizierung von Mustern und eine Bestimmung ihrer Position innerhalb der grafischen Benutzeroberfläche. Zur Identifizierung von Bildmustern können Form, Größe, Farbe, Position und dergleichen Eigenschaften herangezogen werden. Die zur Durchführung der vorgesehenen Tests relevanten Muster werden in einer Lern- und Trainingsphase von der Auswerteeinrichtung 110 eingelernt. Grundsätzlich kann dabei zur Musterkennung jedes dem Fachmann bekannte und geeignete Verfahren eingesetzt werden. Darüber hinaus wird textueller Inhalt der erhaltenen grafischen Ausgabe der Computereinrichtung 101 in dem Grafikteil 111 mittels optischer Texterkennung (OCR für Optical Character Recognition) erkannt und erfasst. Auch bei der Texterkennung ist vorzugsweise eine Bestimmung des Textinhalts und der Position des Textes vorgesehen. Dabei können auch die Positionen von Textbestandteilen und Bildmustern miteinander abgeglichen werden, um beispielsweise beschriftete Schaltflächen der grafischen Benutzeroberfläche zuverlässig zu ermitteln.

Über die Remoteschnittstelle 109 empfangene Audioausgaben der Computereinrichtung 101 werden in einem Audioteil 112 der Auswerteeinrichtung 110 ausgewertet. In dem Audioteil 112 können vorgegebene Geräuschmuster erkannt werden. Wie zuvor erläutert, kann es sich hierbei beispielsweise um Quittierungstöne oder Warntöne handeln. Ferner kann eine Spracherkennung ausgeführt werden, bei der in den Audioausgaben enthaltene Worte identifiziert und in einer maschinell weiterverarbeitbaren Form erfasst werden.

Die Automationseinheit 106 verfügt darüber hinaus über eine Steuereinheit 113, die dazu ausgestaltet ist, auf der Computereinrichtung 101 ausgeführte Programme zu steuern. Die Steuerung erfolgt anhand des Remote-Desktop-Mechanismus, indem in der Steuereinheit 113 erzeugte Steuersignale an die Remoteschnittstelle 109 der Automationseinheit 106 übergeben werden. Von der Remoteschnittstelle 109 werden die Steuerbefehle über die Datenverbindung 107 an die Computereinrichtung 101 gesendet.

Um den Remote-Desktop-Mechanismus zur Steuerung der Computereinrichtung 101 verwenden zu können, erzeugt die Steuereinheit 113 Steuersignale, die Benutzereingaben entsprechen, wie sie mittels der Benutzerschnittstelle 102, insbesondere der enthaltenen Eingabeeinrichtungen 104, von einem lokalen Benutzer generiert werden können. Die Computereinrichtung 101 interpretiert die über die Datenschnittstelle 108 empfangenen Steuersignale infolgedessen in der gleichen Weise, wie Steuersignale, die mittels der Eingabeeinrichtung 104 erzeugt worden sind. Die Erzeugung der Steuersignale in der Steuereinheit 113 umfasst damit eine Emulation von Steuersignalen, die mit den Eingabeeinrichtungen 104 der Computereinrichtung 101 generierbar sind, um Programme auf der Computereinrichtung 101 zu steuern. Vorzugsweise wird zur Erzeugung der Steuersignale eine Skriptsprache verwendet, wie beispielsweise die Skriptsprache AutolT, die vor allem zum Simulieren von Tastenanschlägen und Mausklicks geeignet ist.

Ist als eine Eingabeeinrichtung 104 eine Tastatur vorgesehen, um auf der Computereinrichtung 101 ausgeführte Programme zu steuern, werden entsprechende Tastatursignale von der Steuereinheit 113 erzeugt. Wenn ein Programm alternativ oder ergänzend mit einer Zeigereinrichtung bedienbar ist, dann werden von der Steuereinrichtung 113 ebenfalls entsprechende Steuersignale generiert. Hierbei handelt es sich um Steuersignale zur Verschiebung des Zeigers oder Cursors an eine bestimmte Position innerhalb der grafischen Benutzeroberfläche und Steuersignale, die weiteren mittels der Zeigereinrichtung ausführbaren Bedienaktionen entsprechen, wie beispielsweise einem Mausklick, und/oder ergänzende Tastaturanschläge. Hierdurch lassen sich insbesondere Schaltflächen innerhalb einer grafischen Benutzeroberfläche betätigen. Zur Ermittlung von Positionen innerhalb der grafischen Benutzeroberfläche werden von der Steuereinheit 113 die Ergebnisse der Auswertung herangezogen, die vom Grafikteil 111 der Auswerteeinheit 110 vorgenommen worden ist, um Elemente der grafischen Benutzeroberfläche zu identifizieren und ihre Position zu ermitteln. Anhand der Ergebnisse dieser Auswertung kann die Steuereinheit 113 bestimmen, in welcher Weise ein Zeiger oder Cursor zu verschieben ist, um damit ein bestimmtes Element der grafischen Benutzeroberfläche zu berühren. Um eine gegebenenfalls vorgesehene Spracheingaben an der Computereinrichtung 101 vornehmen zu können, kann die Steuereinheit 113 ferner über einen Sprachsynthesizer verfügen, mit dem entsprechende Spracheingaben erzeugt werden können.

Eine Bewertung von Reaktionen der Computereinrichtung 101 bzw. einem zu testenden Programm, das auf der Computereinrichtung 101 ausgeführt wird, kann von einer Bewertungseinheit 114 des Automationssystems 106 vorgenommen werden. Zu diesem Zweck werden der Bewertungseinheit 114 die Ergebnisse der von der Auswerteeinrichtung 110 vorgenommenen Auswertung zugeführt. D.h. es werden die ermittelten Muster und erkannte Text mitsamt den zugehörigen Positionen sowie erfasste Geräuschmuster und Sprachausgaben mitgeteilt. Die Bewertungseinheit 114 vergleicht die erfassten Benutzerausgaben dann mit vorgegebenen Benutzerausgaben bzw. prüft, ob vorgegebenen Benutzerausgaben empfangen worden sind. Dies dient zum einen zur Auswertung des durchgeführten Tests. So kann die Bewertungseinheit 114 beispielsweise protokollieren, ob und wann eine erwartete Reaktion eines zu testenden Programms auf ein Steuersignal oder ein bestimmtes Ereignis erfolgt ist. Dies gibt Aufschluss darüber, ob sich die Computereinrichtung 101 bzw. ein auf der Computereinrichtung 101 ausgeführtes Programm während des Tests erwartungsgemäß bzw. fehlerfrei verhalten hat, oder nicht. Darüber hinaus können von der Computereinrichtung 101 über die Remoteschnittstelle auch Protokoll- und Schnittstellendaten übertragen werden, die in der Bewertungseinheit 114 bewertet und protokolliert werden, um Aufschluss über die korrekte Funktionsweise der Computereinrichtung 101 oder etwaige Fehler zu geben. Zum anderen können in Abhängigkeit von der Erfassung bestimmter Benutzerausgabe, Steuersignale von der Steuereinheit 113 erzeugt werden. So kann mittels der Bewertungseinheit 114 beispielsweise festgestellt werden, dass sich in der grafischen Benutzeroberfläche ein bestimmtes Fenster geöffnet hat, in dem dann Bedieneingaben mittels der Steuereinheit 113 vorgenommen werden.

Der Test der Computereinrichtung 101 wird von der Automationseinheit 106 gemäß einer vorgegebenen Testroutine ausgeführt, in der durchzuführende Testschritte und deren Abfolge festgelegt sind. Die Testroutine wird vor dem Test in der Automationseinheit 106 hinterlegt und ihre Durchführung von einer Testlogik 115 gesteuert. Die Testlogik 115 instruiert die Steuereinheit 113, die in der Testroutine vorgeschriebenen Steuersignale zu erzeugen. Dabei greift die Testlogik 115 auch auf die in der Bewertungseinheit 114 vorgenommen Bewertung von Benutzerausgaben der Computereinrichtung 101 zu, um die Steuereinheit 113 etwa beim Auftreten einer in der Testroutine spezifizierten Benutzerausgabe zur Erzeugung eines vorgegebenen Steuersignals zu instruieren. Dabei kann, wie zuvor erläutert, beispielsweise ein bestimmtes Steuersignal erzeugt werden, nachdem sich ein vorgegebenes Fenster in der grafischen Benutzeroberfläche geöffnet hat.

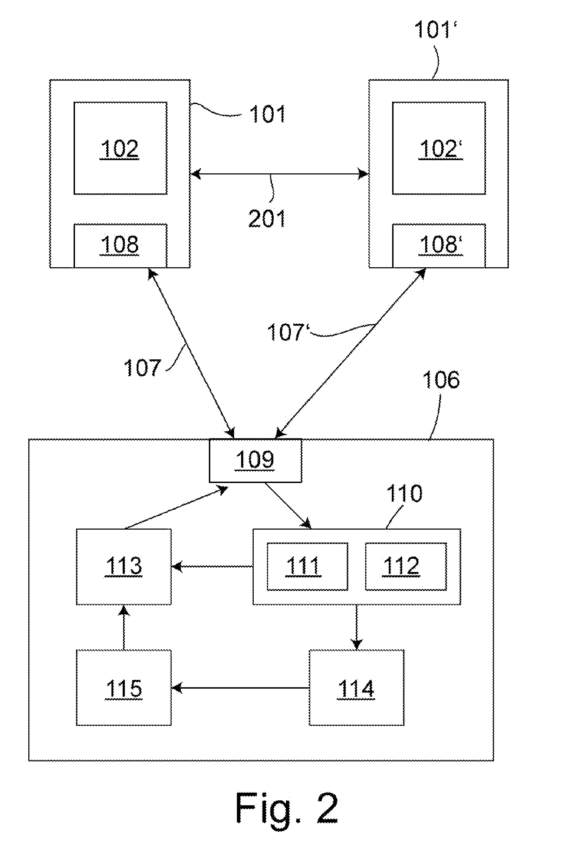

In der zuvor beschriebenen Weise können Tests von Programmen durchgeführt werden, die auf einer einzelnen Computereinrichtung 101 ausgeführt werden. Wie in Figur 2 gezeigt, ist es jedoch gleichfalls möglich, mehrere Computereinrichtungen 101, 101' mit der Automationseinheit 106 zu verbinden, insbesondere Computereinrichtungen 101, 101', die miteinander interagieren. Der durchgeführte Test kann dazu dienen, die Funktionsweise einer oder mehrerer in der Testanordnung enthaltener Computereinrichtungen 101, 101' zu testen. In der dargestellten Ausgestaltung sind zwei Computereinrichtungen 101, 101' vorgesehen, die grundsätzlich ebenfalls in der zuvor beschriebenen Weise ausgestaltet sind. Die dargestellten Computereinrichtungen 101, 101' verfügen jeweils über eine Benutzerschnittstelle 102, 102' zur Ausgabe von Nutzerausgaben und Erfassung von Nutzereingaben, die in der zuvor angegebenen Weise ausgestaltet ist. Ferner ist in beiden Computereinrichtungen 101, 101' jeweils ein Remote-Desktop-Mechanismus implementiert, so dass Nutzerausgaben über eine Datenschnittstelle 108, 108' und eine Datenverbindung 107' an die Automationseinheit 106 übermittelt und in der Automationseinheit 106 erzeugte, emulierte Benutzereingaben empfangen werden können.

Die Testgeräte 101, 101' interagieren über eine weitere Datenverbindung 201, die über ein Netzwerk oder in einer anderen dem Fachmann bekannten Weise hergestellt werden kann. Die beiden Computereinrichtungen 101, 101' wirken derart zusammen, dass eine Benutzereingabe an einer Computereinrichtung 101, 101' zu einer Reaktion an der anderen Computereinrichtung 101, 101' führt. Beispielsweise kann es sich bei der einen Computereinrichtung 101, 101' um einen Servercomputer handeln und bei der anderen Computereinrichtung 101. 101' um einen Clientcomputer, der Dienste des Servercomputers nutzt. Auf dem Servercomputer kann dabei eine Dienstekonfiguration vorgenommen werden, die bestimmt in welcher Weise der Dienst an dem Clientcomputer bereitgestellt wird. Der Dienst kann die Ausführung eines Programms, die Bereitstellung einer Webseite oder ähnliches umfassen. Alternativ kann es sich auch um zwei Computereinrichtungen 101, 101' handeln, zwischen denen Benutzer eine Kommunikationsverbindung aufbauen können, die beispielsweise für die Übertragung von Audioinformationen, Text- und oder Bildinformationen genutzt werden kann.

Mittels der Automationseinheit 106 können die Computereinrichtungen 101, 101' oder eine der Computereinrichtungen 101, 101' insbesondere im Hinblick auf die Interaktion zwischen den Computereinrichtungen 101, 101' getestet werden. Dabei werden die Nutzerausgaben beider Computereinrichtungen 101, 101' in der zuvor beschriebenen Weise innerhalb der Automationseinheit 106 ausgewertet und bewertet. Ferner erfolgt die Steuerung beider Computereinrichtungen 101, 101' in der zuvor beschriebenen Weise anhand von in der Automationseinheit 106 erzeugten Steuersignalen, die in den Computereinrichtungen 101, 101' über die Datenschnittstellen 108, 108' empfangen werden.

Da die Automationseinheit 106 Zugriff auf beide Computereinrichtungen 101, 101' hat, können jedoch auch Reaktion einer Computereinrichtung 101, 101' auf Nutzereingaben an der anderen Computereinrichtung 101, 101' erfasst und ausgewertet werden. So kann beispielsweise getestet werden, wie sich Änderungen der Dienstekonfiguration in einer Servereinrichtung auf die Bereitstellung des Dienstes an der Clienteinrichtung auswirken, oder die Übermittlung von Informationen über eine Kommunikationsverbindung zwischen den Computereinrichtungen 101, 101' kann getestet werden. Hierzu können auch testweise zu übermittelnde Audio- und/oder Textinformationen mittels der Automationseinheit 106 generiert werden.

Unter Verwendung der Automationseinheit 106 ist es somit möglich, das Zusammenwirken mehrerer Computereinrichtungen 101, 101' zu testen. Die Computereinrichtungen 101, 101' können sich dabei an verschieden Orten befinden und die Automationseinheit 106 kann an einem weiteren Ort betrieben werden. Hierdurch wird es einem Unternehmen beispielsweise ermöglicht, mittels einer zentralen Automationseinheit 106, entfernte Computereinrichtungen 101, 101' und deren Zusammenwirken zu testen.

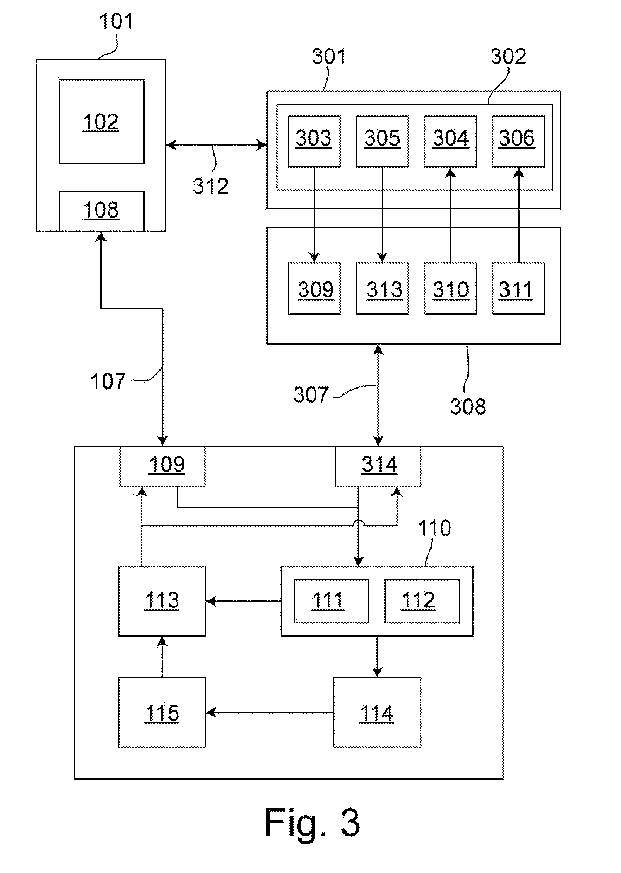

In der Figur 3 ist eine mittels der Automationseinheit 106 verbundene Testanordnung gezeigt, die ebenfalls mehrere Geräte 101, 301 umfasst, die miteinander interagieren. Das eine Gerät 101 ist wiederum in der zuvor beschriebenen Weise ausgestaltet, also als eine Computereinrichtung mit einer Benutzerschnittstelle 102 der zuvor beschriebenen Art zur Ausgabe von Nutzerausgaben und Erfassung von Nutzereingaben. Ferner ist in dem Gerät 101 ein Remote-Desktop-Mechanismus implementiert, so dass Nutzerausgaben über eine Datenschnittstelle 108 und eine Datenverbindung 107 an die Automationseinheit 106 übermittelt werden können und in der Automationseinheit 106 erzeugte, Benutzereingaben entsprechende Steuersignale zur Steuerung des Geräts 101 empfangen werden können.

Das zweite Gerät 301 weist ebenfalls eine Benutzerschnittstelle 302 auf, die eine Anzeigeeinrichtung 303 umfasst, welche als ein Display ausgestaltet sein kann. Mittels der Anzeigeeinrichtung 303 werden, vorzugsweise in einer grafischen Benutzeroberfläche, Ausgaben von auf dem Gerät 301 ausgeführten Programmen dargestellt. Weiterhin kann das Gerät 301 eine beispielsweise als Lautsprecher ausgestaltete Audioausgabeeinrichtung 305 umfassen. Mittels der Audioausgabeeinrichtung 305 können Audiosignale, wie Sprache, Musik oder vorgegebenen Geräuschmuster ausgegeben werden. Bei den Geräuschmustern kann es sich wiederum etwa um Quittierungssignale oder Warnsignale handeln.

Ferner weist das Gerät 301 eine Eingabeeinrichtungen 304 auf, die eine Tastatur umfasst. Vorzugsweise beinhaltet die Eingabeeinrichtung 304 zudem eine Zeigeeinrichtung, um innerhalb von grafischen Benutzeroberflächen einen Zeiger oder Cursor zu navigieren und Bedienaktionen, wie beispielsweise das Betätigen einer Schaltfläche, auszuführen. Die Zeigeeinrichtung kann dabei in die Tastatur integriert oder als eigenständige Einheit ausgestaltet sein. Darüber hinaus kann das Gerät 301 Spracheingaben ermöglichen. Hierfür ist eine Audioeingabeeinrichtung 306 vorgesehen, die als Mikrofon zum Aufzeichnen von Spracheingaben eines lokalen Benutzers ausgestaltet sein kann.

Im Gegensatz zu der Computereinrichtung 101 verfügt das Gerät 301 jedoch nicht über einen Remote-Desktop-Mechanismus. Ein Beispiel für ein derartiges Gerät 301 ist ein mobiles Kommunikationsendgerät, wie etwa ein Mobiltelefon, ein PDA (Personal Data Assistent) oder dergleichen. Weitere Beispiele sind digitale Kameras, Navigationsgeräte, Spielekonsolen und medizinische Geräte, die mit einer Benutzerschnittstelle 302 der zuvor beschriebenen Art ausgestattet sind, jedoch über keinen Remote-Desktop-Mechanismus verfügen.

Die Computereinrichtung 101 und das Gerät 301 sind über eine Datenverbindung 312 miteinander verbunden. Diese kann wiederum über ein Netzwerk oder in einer anderen dem Fachmann bekannten Weise hergestellt werden kann. Sofern es sich bei dem Gerät 301 um ein mobiles Kommunikationsendgerät handelt kann die Verbindung insbesondere über ein Mobilfunknetzwerk hergestellt werden, mit dem das Gerät 301 verbunden ist. Die Computereinrichtung 101 und da Gerät 301 wirken wiederum derart zusammen, dass eine Benutzereingabe an der Computereinrichtung 101 zu einer Reaktion an dem anderen Gerät 301 führt und/oder umgekehrt.

Beispielswiese kann die Computereinrichtung 101 auch bei der in der Figur 3 dargestellten Anordnung als eine Servereinrichtung ausgestaltet sein, die einen Dienst bereitstellt, welcher von dem Gerät 301 aufgerufen wird. Insbesondere kann es sich um einen JAVA-Server handeln, und das Gerät 301 kann als ein JAVA-fähiges Kommunikationsendgerät ausgebildet sein, auf dem eine JAVA-Applikation ausgeführt wird, die von dem JAVA-Server bereitgestellt wird. Gleichfalls kann eine Kommunikationsverbindung zwischen der Computereinrichtung 101 um dem Geräten 301 hergestellt werden, beispielsweise eine Voice-over-IP-Verbindung zwischen einem mobilen Kommunikationsendgerät und einer Computereinrichtung. In diesen Szenarien kann beispielsweise getestet werden, wie sich Änderungen der Dienstekonfiguration in einem JAVA-Server auf die Bereitstellung von JAVA-Applikationen an einem mobilen Kommunikationsendgerät auswirken, oder die Übermittlung von Informationen über eine Kommunikationsverbindung zwischen einem mobilen Kommunikationsendgerät und einer Computereinrichtung kann getestet werden. Gleichfalls kann es sich bei dem Gerät 301 um ein Endgerät handeln, das mittels der Computereinrichtung 101 konfigurierbar ist, oder bei dem andere Eingaben über die Computereinrichtung 101 vorgenommen werden können. So lassen sich mobile Kommunikationsendgeräte beispielsweise oftmals von einer Computereinrichtung 101 konfigurieren, und es lassen sich mit mobilen Kommunikationsendgeräten Nachrichten versenden, die auf einer angeschlossenen Computereinrichtung 101 erstellt werden. Diese Funktionalität kann gleichfalls mit der gezeigten Testanordnung getestet werden.

Der durchgeführte Test kann sich bei der in der Figur 3 gezeigten Testanordnung sowohl auf die Funktionsweise der Computereinrichtung 101 als auch auf die Funktionsweise des Geräts 301 beziehen. Gleichfalls kann die Funktionsweise der Computereinrichtung 101 oder des Geräts 101, wenn beispielsweise die korrekte Funktionsweise der nicht getesteten Einrichtung 101, 301 bekannt ist. So kann beispielsweise geprüft werden, ob ein neues Kommunikationsendgerät in korrekter Weise mit einer Computereinrichtung 101 der zuvor beschriebenen Art zusammenwirkt.

Aufgrund des fehlenden Remote-Desktop-Mechanismus ist zur Erfassung von Nutzerausgaben des Geräts 301 und zum Eingeben von Benutzereingaben eine Robotereinrichtung 308 vorgesehen. Diese verfügt über eine Kameraeinrichtung 309, die zum Erfassen von Abbildern der Anzeigeeinrichtung 303 dient und entsprechend positioniert ist. Ferner kann eine als Mikrofon ausgebildete Audioerfassungseinrichtung 313 vorgesehen sein, mit der Audioausgaben der Audioausgabeeinrichtung 305 des Geräts 301 erfasst werden können. Darüber hinaus ist die Robotereinrichtung 308 dazu in der Lage, die Eingabeeinrichtung 304 zu betätigen. Hierzu weist die Robotereinrichtung 308 ein mechanisches Betätigungsmittel 310 auf, das einen oder mehrere Stößel zur Betätigung einer Tastatur und/oder einer Zeigereinrichtung enthält. Zudem können mittels einer Lautsprechereinrichtung 311 der Robotereinrichtung 308 Audioeingaben an der Audioeingabeneinrichtung 305 des Geräts 301 vorgenommen werden. Ein Beispiel für eine derartige, im Rahmen der vorliegenden Erfindung einsetzbare Robotereinrichtung 308 ist in der DE 10 2006 004 248 A1 offenbart, auf die zur weiteren Erläuterung der zuvor beschriebenen Funktionalitäten verwiesen wird.

Die Robotereinrichtung 308 ist mit der Automationseinheit 106 über eine Datenverbindung 307 verbunden, der seitens der Automationseinheit eine Schnittstelle 314 zugeordnet ist. Die Verbindung kann über ein Netzwerk hergestellt werden, wenn die Robotereinrichtung 308 entfernt von der Automationseinheit 106 angeordnet ist. Gleichfalls kann es auch vorgesehen sein, dass die Robotereinrichtung 308 und die Automationseinheit 106 sich am selben Ort befinden. In diesem Fall kann auch eine direkte Datenverbindung 307, etwa eine kabelgebundene Verbindung, zwischen der Robotereinrichtung 308 und der Automationseinheit 106 bestehen.

Über die Datenverbindung 307 werden die mittels der Robotereinrichtung 308 erfasste Benutzerausgaben des Geräts 301 an die Automationseinheit 106 übertragen. Innerhalb der Automationseinheit 106 werden die Benutzerausgaben an die Auswerteeinheit 110 übergeben.

Mittels des Grafikteils 111 der Auswerteeinheit 110 wird dann eine Auswertung der mittels der Kameraeinrichtung 309 erfassten grafischen Benutzerausgaben der Anzeigeeinrichtung 303 vorgenommen. Diese Auswertung erfolgt in analoger Weise wie die Auswertung von grafischen Benutzerausgaben, die im Rahmen eines Remote-Desktop-Mechanismus über die Remoteschnittstelle 109 in der Automationseinheit 106 empfangen werden. Dies ist möglich, da die Kameraeinrichtung 309 ebenso wie die Remoteschnittstelle 109 Bildfolgen bereitstellt, die von dem Grafikteil 111 der Auswerteeinheit 110 anhand der gleichen Muster- und Texterkennung ausgewertet werden können. Somit ist im Hinblick auf grafische Benutzerausgaben des Geräts 301 lediglich eine Anpassung an das spezielle Gerät 301 bzw. ein auf dem Gerät 301 ausgeführtes Programm erforderlich, wie es auch im Hinblick auf die Computereinrichtung 101 erforderlich ist.

Mittels der Lautsprechereinrichtung 311 der Robotereinrichtung 308 erfasste Audioausgaben des Geräts 301 werden in dem Audioteil 112 der Auswerteeinheit 110 ausgewertet. Diese Auswertung erfolgt ebenfalls in gleicher Weise wie die Auswertung von Audioausgaben, die über die Remoteschnittstelle 109 von dem Gerät 101 in der Automationseinheit 106 empfangen werden. Die Ergebnisse der in der Auswerteeinheit 110 vorgenommenen Auswertung der Benutzerausgaben des Geräts 301 werden in der zuvor bereits beschriebenen Weise an die Bewertungseinheit 114 übergeben.

Zur Steuerung des Geräts 301 generiert die Steuereinheit 113 der Automationseinheit 106 Steuerbefehle zur Ansteuerung des Betätigungsmittels 310. Dies geschieht analog zu der Erzeugung von Steuersignalen, die über die Remoteschnittstelle 109 an die Computereinrichtung 101 gesendet werden. Zur Steuerung der Robotereinrichtung 308 werden jedoch keine Steuersignale emuliert, die mittels der Eingabeeinrichtung 104 des Geräts 301 erzeugbar sind, sondern an das Betätigungsmittel 310 angepasste Steuerbefehle. Die Steuerbefehle werden über die Datenverbindung 307 an die Robotereinrichtung 308 übermittelt. Diese bewegt in Abhängigkeit von den Steuerbefehlen das Betätigungsmittel 310, um die Eingabeeinrichtung 304 zu betätigen. Sofern es erforderlich ist, um eine Bedienfläche einer grafischen Benutzeroberfläche eines Programms des Geräts 301 zu betätigen, kann zur Erzeugung der Steuerbefehle, wie zuvor beschrieben, auf die Auswertung der grafischen des Geräts 301 Benutzerausgabe zurückgegriffen werden, um die Position der Bedienfläche zu ermitteln und das Betätigungsmittel 310 entsprechend zu steuern.

Weiterhin kann die Steuereinheit 113 Audiosignale generieren, die über die Datenverbindung 307 an die Robotereinrichtung 308 übertragen und mittels der Lautsprechereinrichtung 311 ausgegeben werden. Von dem Gerät 301 werden diese Audiosignale als Spracheingaben mittels der Audioeingabeeinrichtung 306 erfasst.

Benutzerausgaben der Computereinrichtung 101 werden in der Automationseinheit 106 über die Remoteschnittstelle 109 empfangen und in der zuvor bereits beschriebenen Weise ausgewertet und bewertet. Ferner wird die Computereinrichtung 101 mittels der Steuereinheit 113 in der zuvor beschriebenen Weise über die Remoteschnittstelle 109 gesteuert.

Instruktionen zur Generierung von Steuersignalen zur Steuerung der Computereinrichtung 101 und Steuerbefehle zu Steuerung der Robotereinrichtung 308 erhält die Steuereinheit 113 von der Testlogik 115 gemäß einer vorgegebenen Testroutine. Dabei können Steuersignale zur Steuerung der Computereinrichtung 101 in Abhängigkeit von ermittelten Bedienzuständen des Geräts 301 generiert werden und Steuerbefehle zur Steuerung der Robotereinrichtung 308 in Abhängigkeit von ermittelten Bedienzuständen des Geräts 301.

In der zuvor dargestellten Weise lassen sich Geräte 101, 301 insbesondere beim Auftreten eines Fehlers testen, um die Fehlerursache zu ermitteln. Ferner können Geräte 101, 301 vor ihrem Vertrieb bzw. ihrer Markteinführung auf ihrer einwandfreie Funktionsweise hin überprüft werden. Sofern die Geräte 101, 301 in großen Stückzahlen verkauft werden, wie es beispielsweise Kommunikationsendgeräten in der Regel der Fall ist, kann sich der auch auf eines oder mehrere ausgewählte Geräte beschränken, da ein Test aller hergestellten Geräte zu aufwändig wäre. In diesem Fall kann jedoch auch mit hoher Zuverlässigkeit die Funktionsweise baugleicher Geräte ermittelt werden.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen.

In den Patentansprüchen angegebene Bezugszeichen sind nicht als Beschränkungen der eingesetzten Mittel und Schritte anzusehen.

## Patentansprüche

1. System zum Testen eines elektronischen Geräts in einer Testanordnung, die über eine Datenschnittstelle (108; 108') und eine Benutzerschnittstelle (102, 102') verfügt, die dazu ausgestaltet ist, Bild- und/oder Audioinformationen umfassende Benutzerausgaben auszugeben, umfassend eine Automationseinheit (106), die über eine Datenverbindung (107; 107') mit der Datenschnittstelle (108; 108') verbindbar ist, wobei die Benutzerausgaben über die Datenschnittstelle (108; 108') ausgebbar und über die Datenverbindung (107; 107') an die Automationseinheit (106) übertragbar sind und die Automationseinheit (106) dazu ausgestaltet ist, eine Auswertung der Benutzerausgaben vorzunehmen.

2. System nach Anspruch 1, wobei die Benutzerausgaben von der Benutzerschnittstelle (102, 102') auf die Datenschnittstelle (108; 108') umleitbar sind oder über die Datenschnittstelle (108; 108') eine Kopie von an der Benutzerschnittstelle (102, 102') ausgegebenen Benutzerausgaben bereitstellbar ist.

3. System nach einem der vorangegangenen Ansprüche, wobei die Automationseinheit (106) dazu ausgestaltet ist, eine Auswertung der Benutzerausgaben anhand wenigstens einer Maßnahme vorzunehmen, die ausgewählt ist aus der Gruppe umfassend eine Bildmustererkennung, eine Texterkennung und eine Spracherkennung.

4. System nach Anspruch 3, wobei die Automationseinheit (106) dazu ausgestaltet ist, aus erhaltenen Bildinformationen eine Bildfolge zu erstellen, wobei in der Bildfolge enthaltene Bilder für die Bildmuster- und/oder Texterkennung heranziehbar sind.

5. System nach einem der vorangegangenen Ansprüche, wobei die Bildinformationen eine grafischen Benutzeroberfläche umfassen.

6. System nach einem der vorangegangenen Ansprüche, wobei die Benutzerschnittstelle (102, 102') wenigstens ein Eingabemittel zum Erzeugen von Steuersignalen umfasst und die Automationseinheit (106) dazu ausgestaltet ist, entsprechende Steuersignale zu erzeugen, die über die Datenverbindung (107; 107') an die Datenschnittstelle übertragbar sind, um die Testanordnung zu beeinflussen.

7. System nach einem der vorangegangenen Ansprüche, wobei zur Übermittlung der Benutzerausgaben und/oder der von der Automationseinrichtung (106) erzeugten Steuersignale eine Remote-Desktop-Verbindung verwendet wird.

8. System nach einem der vorangegangenen Ansprüche, wobei die Automationseinheit (106) dazu ausgestaltet ist, anhand der Auswertung der Benutzerausgaben vorgegebene Benutzerausgeben zu erkennen, und wobei die Automationseinheit (106) dazu konfiguriert ist, die vorgegebenen Benutzerausgaben mit erwarteten Benutzerausgaben zu vergleichen und/oder ein Steuersignal zur Beeinflussung der Testanordnung in Abhängigkeit von einer erkannten Benutzerausgabe zu erzeugen.

9. System nach einem der vorangegangenen Ansprüche, wobei das zu testende elektronische Gerät oder ein weiteres in der Testanordnung enthaltenes elektronisches Gerät über eine weitere Benutzerschnittstelle (302) zur Ausgabe von Bild- und/oder Audioinformationen umfassenden weiteren Benutzerausgaben verfügt, wobei das System eine Erfassungseinrichtung (309; 313) aufweist, die dazu ausgestaltet ist, die von der weiteren Benutzerschnittstelle (302) ausgegebenen Benutzerausgaben zu erfassen und an die Automationseinrichtung (106) zu übermitteln, wobei die Automationseinheit (106) dazu ausgestaltet ist, die Benutzerausgaben auszuwerten.

10. System nach Anspruch 9, wobei die weitere Benutzerschnittstelle (302) wenigstens eine von einem Benutzer mechanisch oder akustisch betätigbare Eingabeeinrichtung (304; 306) umfasst, um das die weitere Benutzerschnittstelle (302) aufweisende Gerät (301) zu steuern, und eine Betätigungseinrichtung (310; 311) vorgesehen ist, die dazu ausgestaltet ist, die Eingabeeinrichtung (304; 306) zu betätigen, wobei die Automationseinheit (106) dazu ausgebildet ist, die Betätigungseinrichtung (310; 311) zu steuern, um eine Steuerung des die weitere Benutzerschnittstelle umfassenden Geräts (301) vorzunehmen.

11. System nach einem der vorangegangenen Ansprüche, wobei die Automationseinheit (106) dazu ausgestaltet ist, die Steuersignale in Abhängigkeit von dem ermittelten Bedienzustand des die weitere Benutzerschnittstelle (302) umfassenden elektronischen Geräts (301) zu erzeugen und/oder wobei die Automationseinheit (106) dazu ausgestaltet ist, die Betätigungseinrichtung (310; 311) in Abhängigkeit von dem ermittelten Bedienzustand eines die Benutzerschnittstelle (102) aufweisenden elektronischen Geräts (101) zu steuern.

12. System nach einem der Ansprüche 9 bis 11, wobei es sich bei dem die weitere Benutzerschnittstelle (302) aufweisenden elektronischen Gerät (301) um ein mobiles Kommunikationsendgerät handelt.

13. Verfahren zum Testen eines elektronischen Geräts in einer Testanordnung, die über eine Datenschnittstelle (108; 108') und eine Benutzerschnittstelle (102; 102') verfügt, die dazu ausgestaltet ist, Bild- und/oder Audioinformationen umfassende Benutzerausgaben auszugeben, wobei eine Automationseinheit (106) über eine Datenverbindung (107; 107') mit der Datenschnittstelle (108; 108') verbunden wird, wobei die Benutzerausgaben über die Datenschnittstelle (108; 108') ausgegeben und über die Datenverbindung (107; 107') an die Automationseinheit (106) übertragen werden und wobei die Automationseinheit (106) die Benutzerausgaben auswertet.

14. Verfahren nach Anspruch 13, wobei die Benutzerausgaben von der Benutzerschnittstelle (102; 102') auf die Datenschnittstelle (108; 108') umgeleitet werden oder über die Datenschnittstelle (108; 108') eine Kopie von an der Benutzerschnittstelle (102; 102') ausgegebenen Benutzerausgaben bereitgestellt wird.

15. Verfahren nach Anspruch 13 oder 14, wobei die Benutzerschnittstelle (102; 102') wenigstens ein Eingabemittel zum Erzeugen von Steuersignalen umfasst und die Automationseinheit (106) entsprechende Steuersignale erzeugt, die über die Datenverbindung (107; 107') an die Datenschnittstelle (108; 108') übertragen werden, um die Testanordnung zu beeinflussen.

16. Verfahren nach einem der Ansprüche 13 bis 15, wobei zur Übermittlung der Benutzerausgaben und/oder der von der Automationseinheit erzeugten Steuersignale eine Remote-Desktop-Verbindung verwendet wird.

17. Elektronisches Gerät, das nach einem Verfahren gemäß einem der Ansprüche 13 bis 16 getestet worden ist oder baugleich ist mit einem weiteren elektronischen Gerät, das nach einem Verfahren gemäß einem der Ansprüche 13 bis 16 getestet worden ist.
